# FASCICULE DE BREVET EUROPEEN

(11) **EP 2 225 544 B1**
(45) Date de publication et mention de la délivrance du brevet: **09.12.2015**
(21) Numéro de dépôt: 08861558.8
(22) Date de dépôt: 16.12.2008
(51) Int. Cl.: G01M 17/02

(54) **METHODE D'EVALUATION PAR COMPARAISON D'UNE IMAGE ACQUISE AVEC UNE IMAGE DE REFERENCE**
BEURTEILUNGSVERFAHREN ANHAND DES VERGLEICHS EINES AUFGENOMMENEN BILDES MIT EINEM REFERENZBILD
METHOD OF EVALUATION BY COMPARISON OF AN ACQUIRED IMAGE WITH A REFERENCE IMAGE

(30) Priorité: 19.12.2007 FR 0760051
(43) Date de publication de la demande: 08.09.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: JOLY, Alexandre, F-63800 Cournon d'Auvergne (FR)
(74) Mandataire: Reynaud, Georges
(86) Numéro de dépôt international: PCT/EP2008/067651
(87) Numéro de publication internationale: WO 2009/077537

(56) Documents cités:
- EP-A- 1 477 765
- EP-A- 1 480 469
- JP-A- 11 203 450
- US-A- 5 146 228

## Description

L'invention concerne le domaine du contrôle visuel des objets, dans lequel on cherche à comparer l'image d'un objet donné avec une où plusieurs images de référence de ce même objet.

Plus particulièrement, l'invention s'adresse au domaine du contrôle visuel des pneumatiques dans lequel on compare l'image d'un pneumatique à contrôler avec une image de référence de ce pneumatique. La comparaison de ces deux images permet, par analyse des différences de déterminer en un point donné de l'image, les variations de la valeur d'une grandeur physique affectée à ce point et issue d'un capteur d'image généralement numérique. Les grandeurs physiques mesurées par le capteur peuvent être relatives à la couleur, à la brillance, à la texture de l'objet observé ou encore à la hauteur des points par rapport à une surface de référence, lorsque l'on utilise un matériel apte à créer une image en trois dimensions.

Ces variations sont analysées à l'aide d'algorithmes adaptés pour déterminer le degré de conformité du pneumatique à évaluer, et décider si ce pneumatique peut être considéré comme conforme ou s'il doit être orienté vers un centre de traitement. Un exemple de contrôle de pneumatiques est décrit par le document EP1477765.

Une des difficultés à surmonter pour réaliser ce type de contrôle, consiste à disposer d'une image qui soit la plus proche possible du modèle « idéel » du type de pneumatique à contrôler tout en prenant en compte la variabilité de l'acquisition.

Ce modèle idéal, peut provenir par exemple de l'image numérique, servant à la conception du pneumatique ou à la réalisation du moule, mais il devient alors difficile d'intégrer les zones d'ombres liées à la nature et à la position des éclairages, de prendre en compte la présence et la forme d'éléments tels que les tétines formées par les évents, ou de restituer, par calcul, les variations des valeurs issues des grandeurs physiques mesurées, et liées à la nature des matériaux caoutchoutiques de couleur généralement noire, en fonction des angles d'éclairage choisis, ou encore de la calibration des capteurs.

Une autre possibilité, consiste à prendre comme référence l'image d'un pneumatique réel et considéré comme « idéal ». Dans ce cas également, il est nécessaire de surmonter d'autres difficultés, telles que la variation de la brillance ou de la texture de la surface à évaluer, dont l'évolution est liée à l'état de surface du moule, mais aussi, la reproductibilité des éclairages entre les images ou encore les différences de positionnement du pneumatique entre la réalisation des deux images.

En partant de l'idée qu'une même anomalie ne se répète pas de manière systématique au même endroit sur plusieurs images de suite, l'objet de l'invention est de considérer que l'image « idéale », ou image de référence, d'une zone donnée du pneumatique, peut s'obtenir en faisant la « moyenne » d'un certain nombre d'image de la même zone ou d'un même motif de base du pneumatique, cette collection d'image pouvant être acquise sur une ou plusieurs images d'un ou de plusieurs pneumatiques.

En effet, les pneumatiques issus d'un même moule sont, si ce n'est identiques, suffisamment proches les uns des autres, pour qu'il soit possible, en un point donné de l'image, de calculer une valeur « moyenne » du signal issu du capteur d'image, et qui va donner l'image dite de référence.

Cette technique nécessite qu'entre deux images, les variations de position d'un point caractéristique du pneumatique ne soient pas trop importantes. Elle s'avère donc particulièrement adaptée aux surfaces moulées avec des éléments rigides telles que les surfaces situées dans les zones extérieures du pneumatique comme la bande de roulement, la zone des flancs ou des épaules, ou encore la zone basse, et qui sont généralement obtenues par moulage sur des parties de moule rigides. La membrane souple, utilisée généralement pour le moulage de la partie intérieure, ne permet pas de positionner les motifs de moulage de manière suffisamment reproductible. Toutefois, il serait possible d'envisager l'utilisation de la technique selon l'invention lorsque le moulage de la partie intérieure se fait avec un noyau rigide.

La méthode selon l'invention consiste donc à faire l'acquisition de N images d'une même zone d'un ou plusieurs pneumatiques à examiner, à faire correspondre les unes par rapport aux autres les N images acquises, de manière à constituer une collection d'image, et à calculer l'image de référence à partir de la collection d'images obtenues précédemment.

On entend par image, l'information issue d'un ou plusieurs capteurs sensibles à la lumière réfléchie, en un point donné, par le pneumatique à examiner. Cette image peut être bi ou tri dimensionnelle, à niveau gris, monochrome, ou en couleur. Elle peut être issue d'une caméra linéaire, d'une caméra matricielle à niveau de gris ou en couleur ou encore de capteurs à triangulation laser etc...

A chaque pixel de l'image est associé la valeur en ce point d'un certain nombre de grandeurs physiques mesurées en ce point par le ou les capteurs, telles que la hauteur par rapport à une surface de référence, la brillance, la texture, le niveau de gris ou de couleur.

Une image se présente alors sous la forme d'autant de tableaux de données que de grandeurs physiques mesurées. Chacun des tableaux contenant pour une grandeur donnée les valeurs de cette grandeur physique pour un point de coordonnées i, j.

Il suffit alors de comparer l'image du pneumatique à examiner, avec l'image de référence obtenue selon la méthode ci-dessus, pour déterminer les zones du pneumatique comportant une anomalie. Le pneumatique à examiner peut être indifféremment issu ou non de la collection d'image ayant servie au calcul de l'image de référence.

La comparaison se fait en superposant l'image à évaluer sur l'image de référence, et en faisant, pour un point donné de l'image, la différence entre les valeurs des grandeurs physiques de l'image de référence et les valeurs de ces mêmes grandeurs physiques mesurées sur le pneumatique à évaluer. Les algorithmes relatifs à la détection des seuils d'anomalie ne font pas l'objet de la présente invention.

Un mode particulier de mise en oeuvre de l'invention concerne la bande de roulement qui est constituée de motifs de moulages formés par l'assemblage de motifs de base, en nombre réduits, juxtaposés circonférentiellement et séquencés de manière précise et déterminée.

Les motifs de base de la sculpture ont des formes similaires et ont des dimensions proches mais pas totalement identiques. Chaque type de motif de base apparaît donc plusieurs fois sur la circonférence de la sculpture de l'enveloppe. Le choix des dimensions et l'agencement des motifs de base sont fait de manière judicieuse et connue de l'homme du métier, dans le but de réduire les vibrations ou les bruits de roulement.

L'image de référence se compose alors des seules images de référence des motifs de base, qu'il suffit alors de comparer à l'image des motifs de base réels disposés sur la circonférence du pneumatique, après les avoir identifiés et localisés.

De plus, il suffit d'acquérir l'image de la bande de roulement d'un seul pneumatique pour obtenir une collection d'images suffisante de chacun des motifs de base, et pour calculer les images de référence de ces motifs de base auxquelles vont être comparées chacune des images des motifs de base réels des pneumatiques à évaluer.

On observera que ce pneumatique peut être de préférence le pneumatique dont est issu ladite collection d'image ayant servie au calcul des images de référence des motifs de base. Ainsi la référence servant à l'évaluation d'un pneumatique provient du pneumatique à évaluer lui-même. De cette manière, on réduit largement des difficultés évoquées dans les précédents paragraphes et concernant la variabilité des conditions de mesure.

La description qui suit, s'appuie sur le mode de mise en oeuvre de l'invention concernant la bande de roulement et sur les figures 1 à 3, dans lesquelles :
- la figure 1 représente une vue schématique d'une portion de bande de roulement,
- la figure 2 représente une vue schématique des 4 types de motif de bases utilisés pour la réalisation de la sculpture dé la bande de roulement,
- la figure 3 représente les motifs de base d'un même type obtenu après l'étape de recherche et de positionnement.

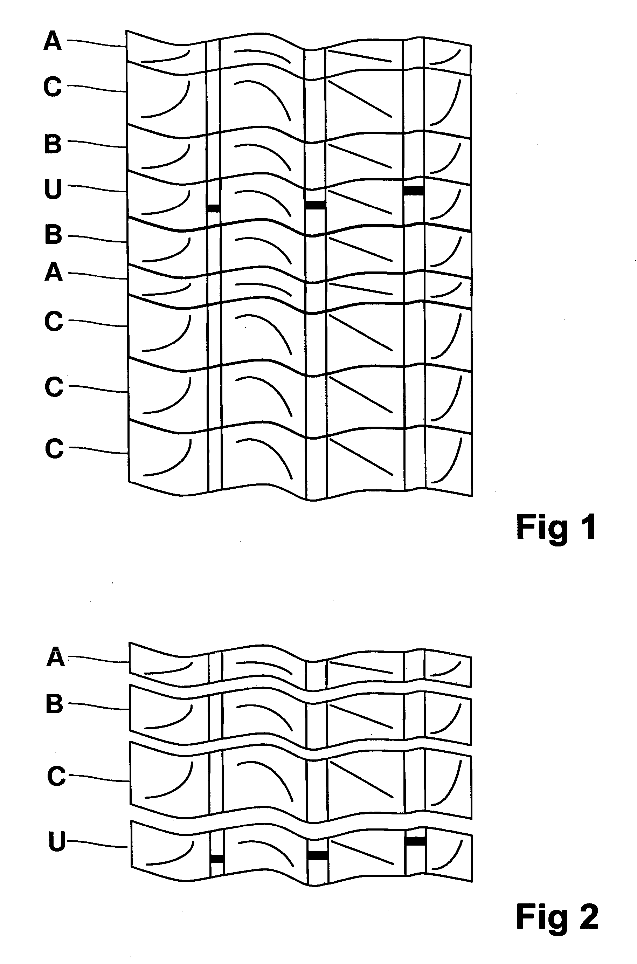

La figure 1 permet de visualiser une portion de bande de roulement de pneumatique, sur laquelle on observe la présence de plusieurs types de motifs de base, notés respectivement A, B, C et U. Ces types de motifs de bases sont représentés individuellement à la figure 2, et comprennent par exemple 3 motifs A, B et C de longueurs différentes, et un motif U contenant les témoins d'usure. Ces quatre types de motif de base vont se répéter, selon une séquence précise, tout au long de la circonférence du pneumatique.

Ainsi, la séquence de la portion de bande de roulement illustrée à la figure 1 est une séquence notée ACBUBACCC. Et, pour une dimension donnée de cette gamme de pneumatique la séquence finale sera formée par la juxtaposition de ces quatre types de motif de base, agencés selon une séquence complexe et connue, débutant par ACBUBACCC et se poursuivant par exemple par les motifs BCAABUAABCBCBAAABBUCACAACBAACBBAU etc...

Une dimension peut compter, en règle générale, de un à cinq motifs de base, et une bande de roulement comprend, selon les diamètres, la répétition de quatre vingt à cent cinquante motifs de base, agencés selon la séquence désirée. Il en résulte qu'un type de motif de base donné, par exemple le motif de base A, sera utilisé, selon les dimensions et le type de sculpture, entre dix à quarante fois par bande de roulement.

La forme des frontières transversales de chacun des type de motif de base est adaptée pour pouvoir épouser indistinctement la frontière transversale d'un motif de base quelconque d'un autre type.

Le motif de base représenté à la figure occupe toute la largeur transversale de la bande de roulement. Cette disposition n'est pas limitative, et les principes de l'invention peuvent s'étendre au cas où la sculpture comporterait plusieurs motifs de base différents disposés sur une même transversale. C'est le cas en particulier des sculptures dites asymétriques.

L'acquisition de l'image de la bande de roulement (ou du flanc, de la zone épaule ou de la zone basse) peut se faire de manière connue en utilisant par exemple une caméra linéaire ou tout autre moyen d'acquisition d'image. De préférence on choisira un moyen d'acquisition numérique permettant d'obtenir une ou plusieurs valeurs numériques pour chacune des grandeurs physiques caractéristiques. Chaque pixel se voit également attribuer des coordonnées dans un repère généralement en deux dimensions. L'information de hauteur, relative aux motifs de sculpture ou aux gravures des flancs, est une information associée à une grandeur physique, et déterminée par des moyens connus, en référence à une surface considérée comme la surface de base.

Une fois l'acquisition de l'image réalisée, il convient de rechercher la séquence et la position des motifs de base définissant la sculpture, et de délimiter ces motifs afin de les isoler et de les regrouper par type.

Pour réaliser cette opération, il est nécessaire de disposer, en donnée d'entrée, des modèles des motifs de base. Les modèles peuvent être relativement sommaires, dés lors que les données utilisées ne servent qu'à identifier les motifs de base de l'image acquise de manière à les classer dans la catégorie de motif leur correspondant. Ces modèles sont en règle générale différents des images de référence, bien qu'ils puissent s'en déduire.

Les modèles peuvent provenir, par exemple, de l'acquisition d'une image initiale en niveau de gris sur laquelle on aura préalablement identifié les motifs de base. L'identification du motif de base sur l'image acquise, se fait alors en recherchant la meilleure corrélation entre l'image acquise et l'image des différents motifs de base provenant de l'image initiale. Les techniques d'analyse de corrélation sont connues en soi, et font appel à la recherche d'un maximum par zone, et à l'utilisation d'un filtre d'ordre de taille déterminée et correspondant sensiblement à la taille d'un motif de base.

Ces modèles peuvent aussi provenir du dessin des contours extérieurs utilisés pour représenter la sculpture ou encore des données de conception du pneumatique ou du moule. Il suffit alors de transformer l'image acquise de la bande de roulement de manière à ne faire apparaître que les seuls contours, en filtrant les données à l'aide d'algorithmes connus, tel que par exemple un algorithme du type Canny-Deriche, et adapté au traitement d'une image 2D. Puis, on recherchera la meilleure corrélation entre les contours des motifs de base provenant de l'image servant de modèle et les contours de l'image acquise. En particulier, il peut s'avérer nécessaire d'adapter l'image servant de modèle pour tenir compte du fait que l'image acquise est obtenue sur un pneumatique susceptible de subir des déformations pendant la phase de refroidissement.

A cet égard, on notera que le contour de chacun des motifs peut s'écarter du modèle théorique utilisé pour déterminer la famille de motif de base auquel ce motif appartient. De même, les contours des images acquises des différents motifs d'une même famille, par exemple les motifs de type A, peuvent subir des décalages les unes par rapport aux autres. Ces écarts sont dus pour une large part à la façon dont les éléments de sculpture sont montés mécaniquement dans le moule, ainsi qu'aux déformations élastiques subies par le sommet lors de mise sous pression du pneumatique.

En conséquence, il peut s'avérer intéressant de procéder au recalage des images d'un même type de motif de base, de manière à ce que des motifs, des points caractéristiques tels que les témoins d'usure, des éléments de contour, ou des frontières de zone, préalablement identifiés, se superposent au mieux. Ce recalage s'effectue par déformation locale pour faire correspondre ces motifs, ces points caractéristiques, ces éléments de contour ou ces frontières de zone.

Une fois cette information obtenue, on obtient un découpage par zones de l'image acquise, chacune des zones correspondant à un motif de base. Il est alors possible d'établir la séquence de ces motifs sur la longueur de la circonférence et il peut être judicieux, dans le cadre d'un premier contrôle de vraisemblance, de comparer cette séquence avec la séquence connue de la dimension.

Il est également envisageable, de se servir de la séquence connue des motifs de base pour localiser et identifier chacun des motifs de base de l'image acquise.

Toutes ces méthodes ont pour objet de déterminer la localisation des motifs de base sur l'image acquise de la bande de roulement, de manière à les identifier, à les isoler, pour constituer une collection d'images de ce motif de base et qui va servir au calcul de l'image dite de référence.

Dans le cas du flanc, il n'y pas la nécessité de rechercher de motifs de base. Aussi la collection d'image est formée par les images des flancs de N pneumatiques différents et acquises précédemment. Il est néanmoins nécessaire de superposer au mieux les N images en utilisant les méthodes de calculs de corrélation exposées dans les paragraphes précédents. Ce « recalage » des images les unes par rapport aux autres peut se faire aisément en faisant tourner l'image à recaler autour au centre de rotation correspondant à la projection de l'axe de rotation du pneumatique dans le plan de l'image, et en recherchant la meilleure corrélation par rapport à une image modèle. A cet effet, et dans le but d'alléger les calculs, il peut s'avérer intéressant de se servir des motifs caractéristiques de la zone flanc pour effectuer cette superposition.

Ladite image modèle, comme dans le cas de la bande de roulement, sera de préférence, une première image en niveau de gris acquise précédemment, ou encore une image numérique du plan de gravure du moule ce qui nécessite alors d'effectuer les calculs de correction liés à la projection des flancs sur un plan et d'extraire, à l'aide de la méthode citée ci-dessus, les contours significatifs de l'image acquise du flanc. De manière complémentaire, il est possible également de rechercher des motifs significatifs et de déformer l'image de manière à mettre ces motifs en correspondance.

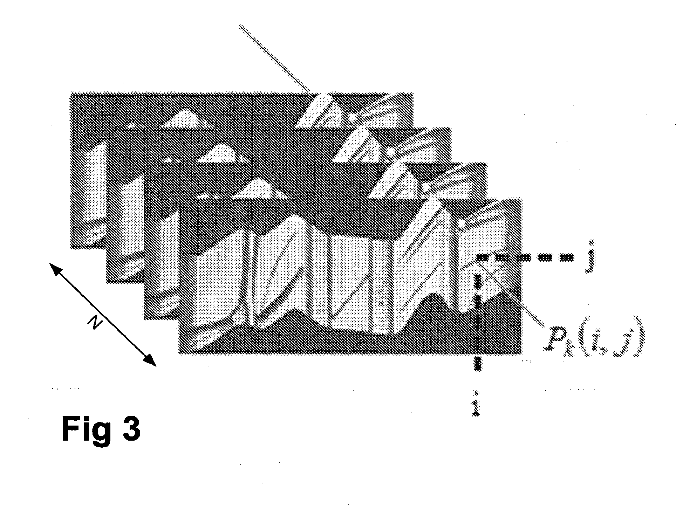

En reprenant le cas de la zone sommet, la figure 3 représente un ensemble de N motifs de base d'une bande de roulement d'un même type.

Dans l'image k d'un motif de base de cet ensemble, le pixel de coordonnées i, j est noté Pₖ (i, j). A ce pixel sont associées comme cela a été dit ci-dessus, les valeurs au point de coordonnées i, j, des grandeurs physiques mesurées par le capteur.

Une image de référence est obtenue, pour chacune de ces grandeurs, et pour le point de coordonnées i, j, noté P_{Moy} (i, j), en calculant la moyenne des valeurs de ces grandeurs associées aux pixels Pₖ (i, j), et provenant des N images constituant la collection d'image.

Cette référence correspond à la représentation calculée de la surface de référence «idéale», sans défaut, dont l'acquisition a été faite dans les mêmes conditions ou dans des conditions très proches de celles de l'image acquise que l'on souhaite analyser.

De manière à éviter l'influence des valeurs extrêmes, causée par exemple par la présence sur une des images de la collection d'une anomalie localisée, il est aussi possible de calculer la valeur médiane plutôt que la valeur moyenne. Ce mode de calcul permet de réduire l'influence d'un défaut lorsque la collection d'image comporte un nombre d'image réduit, comme par exemple le motif de base comprenant les témoins d'usure. Il en découle une réduction des anomalies d'évaluation lorsque, par la suite, on comparera chaque motif avec le motif de référence.

On calculera par exemple la valeur médiane du niveau de gris de tous les pixels Pₖ (i, j) des images de la collection de coordonnée (i, j) pour obtenir la valeur de niveau de gris du pixel de coordonnée (i,j) de l'image de référence et notée P_{Med} (i, j) ; ou encore la valeur moyenne de brillance de tous les pixels Pₖ (i, j) de coordonnée (i, j) pour obtenir la valeur de brillance du pixel de coordonnée (i,j) de l'image de référence.

Aussi, il peut s'avérer intéressant à cette étape, d'associer à chacune des grandeurs et pour chaque point de coordonnée (i, j) de l'image de référence d'autres valeurs calculées, de nature statistique, telles que des valeurs de seuil, des valeurs d'écart type, des moyennes de valeur médianes, des écarts moyens par rapport à la valeur médiane etc... qui s'avèreront utiles pour l'interprétation des écarts lors de la phase d'évaluation ultérieure.

On obtient ainsi, pour un même motif de base de la bande de roulement ou pour un même flanc, autant d'images de référence que de grandeurs calculées. L'image de référence se matérialise alors sous la forme, d'un ensemble de tableaux de données correspondant, pour chacune des grandeurs physique, ou pour chacune des grandeurs statistiques associées à ces grandeurs, à la valeur calculée de ces grandeurs physique ou statistiques pour chaque point de coordonnées i, j.

La phase suivante de la méthode d'évaluation consiste à comparer chaque nouvelle image d'un motif de base ou d'un flanc avec l'image de référence obtenue dans les conditions décrites ci-dessus.

La méthode de comparaison peut être basée sur une simple analyse en chaque point de coordonnée i, j et pour une grandeur physique donnée, des écarts entre la valeur mesurée sur l'image à évaluer de cette grandeur physique et la valeur de référence de cette grandeur obtenue selon la méthode décrite ci-dessus. Lorsque cet écart est supérieur à un seuil prédéterminé ce pixel sera déclaré en anomalie. Si les pixels voisins sont également déclarés anormaux, la zone en question sera repérée, et le motif de base, ou le flanc de pneumatique, sur lequel à été détectée l'anomalie sera lui-même déclaré en anomalie de manière à orienter l'action d'évaluation du pneumatique.

Une collection d'image est formée par un nombre N suffisant d'images, typiquement de 10 ou 15 images, des zones concernées, acquises sur une même bande de roulement, ou sur 10 ou 15 pneumatiques examinés précédemment. Mais il peut également s'avérer avantageux d'orienter le choix des images formant la collection de référence en éliminant par exemple une zone ou les images de pneumatiques dans lesquelles une anomalie a été détectée, ou tout autre arrangement susceptible de réduire l'influence des anomalies et des écarts significatifs par rapport à une valeur considérée comme normale.

Il est également possible de calculer une image de référence glissante, en se servant de la collection d'images provenant des N derniers pneumatiques examinés préalablement, de manière à s'affranchir des évolutions lentes liées par exemple au vieillissement du moule. Il est encore possible de conserver en mémoire des images de référence calculées à des époques déterminées pour apprécier ces évolutions lentes.

A la lecture de ce qui précède l'application de la méthode de calcul de la référence permet d'adapter avec souplesse la référence servant de base à l'évaluation des anomalies visuelles de surface visibles sur les pneumatiques après l'étape de vulcanisation, et de s'affranchir des étapes de calcul nécessaires lorsque la référence est issue d'un modèle théorique, parfois très éloigné du pneumatique réel tel qu'il se présente visuellement dans l'atelier de fabrication.

## Revendications

1. Méthode d'évaluation de la surface d'une bande de roulement d'un pneumatique formée de la répétition d'un nombre restreint de type de motifs de base juxtaposés circonférentiellement selon une séquence donnée (ACBUBACC...) et moulée avec des éléments rigides, comprenant les étapes suivantes :
- à l'aide d'un capteur sensible à la réflexion de la lumière, on réalise l'image de la surface de la bande de roulement, l'image étant constituée par les valeurs de grandeurs physiques mesurées par ledit capteur en chacun des points de coordonnées i, j de ladite surface de la bande de roulement de ce pneumatique,
- à l'aide d'un modèle initial, on identifie sur l'image la séquence et la position des images des motifs de base,
- on isole, et on regroupe par type, les images desdits motifs de base de manière à constituer une collection de N images dudit motif de base,
- on fait correspondre par superposition les images de ladite collection,
- on compare l'image de chacun des motifs de base de ladite collection à évaluer avec une image de référence dudit motif de base dont la valeur des grandeurs physiques est calculée à partir de la valeur de chacune des grandeurs physiques mesurées sur les N images de ladite collection d'images de ce motif de base et extraites de l'image de la bande de roulement de ce même pneumatique.

2. Méthode d'évaluation selon la revendication 1 dans laquelle le modèle initial est formé par une image de la surface d'un pneumatique sur laquelle les motifs de base ont été préalablement identifiés.

3. Méthode d'évaluation selon la revendication 1 dans laquelle le modèle initial est formé par l'image de référence de la bande de roulement provenant des données de conception du pneumatique ou du moule.

4. Méthode d'évaluation selon l'une des revendications 1 à 3, dans laquelle le capteur est apte à fournir une information numérique de la valeur des grandeurs physiques mesurées.

5. Méthode d'évaluation selon l'une des revendications 1 à 4, dans laquelle on réalise la mise en correspondance par superposition des images par calcul de corrélation entre chacune des images de la collection en faisant glisser les images les unes sur les autres.

6. Méthode d'évaluation selon l'une des revendications 1 à 4, dans laquelle, au cours de l'étape de mise en correspondance par superposition des images on détermine dans l'image des éléments caractéristiques et on déforme l'image pour mettre ces éléments caractéristiques en correspondance.

7. Méthode d'évaluation selon l'une des revendications 1 à 6, dans laquelle les grandeurs physiques mesurées comprennent la hauteur par rapport à une surface de référence, la brillance, la texture, le niveau de gris ou la couleur.

8. Méthode d'évaluation selon l'une des revendications 1 à 7, dans laquelle, pour chacune des grandeur physiques mesurées, la valeur d'une grandeur physique en un point i, j de l'image de référence, est formées par le calcul d'une ou plusieurs valeurs statistiques obtenues à partir des N valeurs de cette grandeur physique mesurée au point de coordonnées i, j de chacune des images de ladite collection d'image.

9. Méthode d'évaluation selon la revendication 8, dans laquelle les valeurs statistiques comprennent le calcul de la valeur moyenne, de la valeur médiane, de l'écart type, de la moyenne des médianes.

10. Méthode d'évaluation selon l'une des revendications 1 à 9 dans laquelle on détermine la séquence des motifs de base de l'image de la bande de roulement à évaluer et on compare cette séquence à la séquence de base connue

11. Méthode d'évaluation selon l'une des revendications précédentes dans laquelle on compare les images de référence de pneumatiques réalisées à des époques déterminées de manière à apprécier les évolutions lentes liées au vieillissement du moule.

## Patentansprüche

1. Verfahren zur Beurteilung der Oberfläche eines Laufstreifens eines Reifens, der durch die Wiederholung einer begrenzten Anzahl von Typen von Grundmustern gebildet wird, die in Umfangsrichtung gemäß einer gegebenen Folge (ACBUBACC...) nebeneinander angeordnet sind, und mit starren Elementen geformt ist, die folgenden Schritte aufweisend:
- mithilfe eines für die Reflexion des Lichtes empfindlichen Sensors wird das Bild der Oberfläche des Laufstreifens hergestellt, wobei das Bild durch die Werte von physikalischen Größen gebildet wird, die von dem Sensor in jedem der Punkte mit den Koordinaten i, j der Oberfläche des Laufstreifens dieses Reifens gemessen werden,
- mithilfe eines Anfangsmodells werden auf dem Bild die Folge und die Position der Bilder der Grundmuster identifiziert,
- die Bilder der Grundmuster werden isoliert und nach Typen zusammengefasst, um eine Sammlung von N Bildern dieses Grundmusters zu bilden,
- die Bilder der Sammlung werden durch Überlagerung in Übereinstimmung gebracht;
- das zu beurteilende Bild jedes der Grundmuster der Sammlung wird mit einem Referenzbild dieses Grundmusters verglichen, dessen Wert der physikalischen Größen ausgehend von dem Wert jeder der physikalischen Größen berechnet wird, die an den N Bildern der Sammlung von Bildern dieses Grundmusters gemessen werden, die aus dem Bild des Laufstreifens dieses Reifens extrahiert wurden.

2. Verfahren zur Beurteilung nach Anspruch 1, wobei das Anfangsmodell von einem Bild der Oberfläche eines Reifens gebildet wird, auf welchem die Grundmuster zuvor identifiziert worden sind.

3. Verfahren zur Beurteilung nach Anspruch 1, wobei das Anfangsmodell von dem Referenzbild des Laufstreifens gebildet wird, das aus den Entwurfsdaten des Reifens oder der Form hervorgeht.

4. Verfahren zur Beurteilung nach einem der Ansprüche 1 bis 3, wobei der Sensor geeignet ist, eine digitale Information über den Wert der gemessenen physikalischen Größen zu liefern.

5. Verfahren zur Beurteilung nach einem der Ansprüche 1 bis 4, wobei das Bringen der Bilder in Übereinstimmung durch Überlagerung durch Berechnung einer Korrelation zwischen den einzelnen Bildern der Sammlung realisiert wird, indem man die Bilder übereinander gleiten lässt.

6. Verfahren zur Beurteilung nach einem der Ansprüche 1 bis 4, wobei während des Schrittes des Bringens der Bilder in Übereinstimmung durch Überlagerung in dem Bild charakteristische Elemente bestimmt werden und das Bild verformt wird, um diese charakteristischen Elemente in Übereinstimmung zu bringen.

7. Verfahren zur Beurteilung nach einem der Ansprüche 1 bis 6, wobei die gemessenen physikalischen Größen die Höhe bezüglich einer Referenzfläche, die Helligkeit, die Textur, die Graustufe oder die Farbe beinhalten.

8. Verfahren zur Beurteilung nach einem der Ansprüche 1 bis 7, wobei für jede der gemessenen physikalischen Größen der Wert einer physikalischen Größe in einem Punkt i, j des Referenzbildes durch die Berechnung eines oder mehrerer statistischer Werte gebildet wird, die ausgehend von den N Werten dieser im Punkt mit den Koordinaten i, j jedes der Bilder der Bildersammlung gemessenen physikalischen Größe erhalten werden.

9. Verfahren zur Beurteilung nach Anspruch 8, wobei die statistischen Werte die Berechnung des Mittelwertes, des Medians, der Standardabweichung, des Mittelwerts der Mediane beinhalten.

10. Verfahren zur Beurteilung nach einem der Ansprüche 1 bis 9, wobei die Folge der Grundmuster des Bildes des zu beurteilenden Laufstreifens bestimmt wird und diese Folge mit der bekannten Grundfolge verglichen wird.

11. Verfahren zur Beurteilung nach einem der vorhergehenden Ansprüche, wobei die Referenzbilder von Reifen verglichen werden, die in bestimmten Zeitabschnitten hergestellt wurden, um die langsamen Veränderungen einzuschätzen, die mit der Alterung der Form verbunden sind.

## Claims

1. A method for evaluating the surface of a tire tread, said tread being formed by the repetition of a restricted number of types of basic patterns, juxtaposed circumferentially in a given sequence (ACBUBACC...), and molded with rigid elements, comprising the following steps:
- an image of the tread pattern surface is constituted with the aid of a sensor sensitive to the reflection of the light, the image being constituted by the values of physical magnitudes measured by said sensor at each of the points with coordinates i, j of said surface,
- the sequence and position of the basic patterns is identified on the image with the aid of an initial model,
- images of said basic patterns are isolated and gathered by type, so as to constituted a collection of N images of said basic pattern,
- the images of said collection are made to correspond by superposition,
- the image of each basic pattern of said collection to be evaluated is compared with a reference image,
wherein the value of the physical magnitudes of the reference image is calculated based on the value of each of these physical magnitudes measured on the N images of said collection of images of basic patterns extracted from the image of the tread of the tire.

2. The evaluation method as claimed in claim 1, wherein the initial model is formed by an image of the tire surface wherein the basic patterns have been preliminary identified.

3. The evaluation method as claimed in claim 1, wherein the initial model is formed by the reference image of the tire tread issued from conception data of the tire or the mold.

4. The evaluation method as claimed in any of claims 1 to 3, wherein the sensor is capable of providing digital information of the value of the physical magnitudes measured.

5. The evaluation method as claimed in any of claims 1 to 4, wherein the placing in correspondence by superposition of the images is carried out by calculating the correlation between each of the images of the collection by sliding the images over one another.

6. The evaluation method as claimed in any of claims 1 to 4, wherein, during the step of placing the images in correspondence by superposition, characteristic elements of the image are determined and the image is deformed in order to place these characteristic elements in correspondence.

7. The evaluation method as claimed in one of claims 1 to 6, wherein the physical magnitudes measured comprise the height relative to a reference surface, the brightness, the texture, the gray level or the color.

8. The evaluation method as claimed in one of claims 1 to 7, wherein, for each of the physical magnitudes measured, the value of a physical magnitude at a point i, j of the reference image is formed by the calculation of one or more statistical values obtained based on the N values of this physical magnitude measured at the point with coordinates i, j of each of the images of said collection of images.

9. The evaluation method as claimed in claim 8, wherein the statistical values comprise the calculation of the mean value, of the median value, of the standard deviation, of the mean of the medians.

10. The evaluation method as claimed in one of claims 1 to 9, wherein the sequence of the basic patterns of the image of the tread to be evaluated is determined and this sequence is compared with the known basic sequence.

11. The evaluation method as claimed in one of the preceding claims, wherein reference images of tires calculated at determined periods in order to assess these slow evolutions.
